# FASCICULE DE BREVET EUROPEEN

(11) **EP 2 346 343 B1**
(45) Date de publication et mention de la délivrance du brevet: **11.07.2012**
(21) Numéro de dépôt: 09740166.5
(22) Date de dépôt: 08.09.2009
(51) Int. Cl.: A23C 19/06, A23C 19/082, A01J 25/00

(54) **PROCEDE ET INSTALLATION DE PREPARATION D'UN FROMAGE OU D'UNE SPECIALITE FROMAGERE**
VERFAHREN UND GERÄT FÜR DIE HERSTELLUNG VON KÄSE BZW. EINES KÄSEPRODUKTS
METHOD AND EQUIPMENT FOR PREPARING CHEESE OR A CHEESE PRODUCT

(30) Priorité: 24.09.2008 FR 0805246
(43) Date de publication de la demande: 27.07.2011
(73) Titulaire: BONGRAIN S.A., 78220 Viroflay (FR)
(72) Inventeur: COULON, Florence, F-75015 Paris (FR); BEUDON, Didier, F-78120 Rambouillet (FR); RUSSO, Paul, 87496 Untrasried (DE)
(74) Mandataire: Bolinches, Michel Jean-Marie
(86) Numéro de dépôt international: PCT/FR2009/001070
(87) Numéro de publication internationale: WO 2010/034895

(56) Documents cités:
- WO-A-2007/072901
- JP-A- 2005 348 697
- US-A- 4 112 131
- US-A- 5 079 024
- US-A1- 2005 249 854
- ANAL ET AL: "Recent advances in microencapsulation of probiotics for industrial applications and targeted delivery", TRENDS IN FOOD SCIENCE AND TECHNOLOGY, ELSEVIER SCIENCE PUBLISHERS, GB, vol. 18, no. 5, 29 avril 2007 (2007-04-29) , pages 240-251, XP022051785, ISSN: 0924-2244
- DAS P K ET AL: "Drop breakage model in static mixers at low and intermediate Reynolds number", CHEMICAL ENGINEERING SCIENCE, OXFORD, GB, vol. 60, no. 1, 1 janvier 2005 (2005-01-01), pages 231-238, XP004674943, ISSN: 0009-2509

## Description

La présente invention concerne un procédé et une installation de préparation d'un fromage ou d'une spécialité fromagère incorporant au moins un composé thermosensible à effet nutritionnel positif, tel qu'une bactérie probiotique. L'invention s'applique au dosage de tels fromages ou spécialités fromagères, en particulier d'un fromage fondu ou d'une pâte fraîche préparés selon une technologie « chaude ».

De manière connue, la production des fromages fondus (« processed cheeses » en anglais) met en oeuvre un système de dosage précis permettant de remplir un contenant qui peut être de type portion aluminium ou plastique, barquettes plastiques ou boyaux plastiques. Les grammages rencontrés industriellement sont couramment de l'ordre de 18 g-20 g par portion, de 80 g à 150 g pour les barquettes et de plusieurs centaines de grammes, voire de plusieurs kilos pour les boyaux.

Le dosage industriel d'un fromage fondu est réalisé à chaud, typiquement à une température d'au moins 70 à 72° C, afin de permettre un remplissage et un scellage hygiénique du contenant. Etant donné que le processus amont de fonte de ce fromage peut être réalisé de 80° C (pasteurisation) à 140°C (stérilisation sur ligne UHT), on considère en pratique que les formes végétatives des bactéries sont totalement détruites par le processus de fonte et de dosage. En effet, ce processus correspond en fait à un maintien de longue durée dans une trémie secondaire à une température destructive supérieure à 70° C, ce qui contribue de manière significative à cette destruction.

Ainsi, il paraît très difficile d'incorporer aux fromages fondus des bactéries vivantes à effet nutritionnel positif (i.e probiotiques), du fait que les courbes de destruction thermique des souches correspondantes, peu thermo-résistantes, montrent une destruction quasi totale de la flore probiotique par la chaleur, même dans le cas où l'on additionne à la pâte fondue une quantité initiale de bactéries très élevée de l'ordre de 10⁹ à 10¹⁰ ufc/g. Le taux de destruction thermique, de ces bactéries, exprimé par log Nt/No, No étant la charge bactérienne initiale dans le mélange et Nt celle au temps t d'entreposage après dosage, peut ainsi atteindre le niveau maximal de -9 ou -10.

On a néanmoins cherché par le passé à produire du fromage fondu incorporant de telles bactéries vivantes, telles que des bactéries lactiques, en refroidissant considérablement la pâte fondue avant d'y mélanger ces bactéries, comme décrit dans le document WO-A-2007/072901 où l'on abaisse la température à 35° C en vue de ce mélangeage et du dosage subséquent.

Le procédé de dosage à basse température présenté dans ce document est à la limite acceptable dans le cas d'un circuit logistique avec une chaîne du froid maintenant une température comprise entre 4 et 8° C, comme dans la plupart des pays d'Europe de l'ouest, avec néanmoins une durée de vie du produit dosé qui est alors réduite à 45 jours au lieu des 60 à 90 jours minimum usuels. Cependant, un inconvénient majeur de ce procédé est que la température de 35° C utilisée pour le dosage n'est pas du tout adaptée à certains pays où le circuit logistique et la chaîne du froid ne présentent pas ce degré de fiabilité, par exemple en raison de températures ambiantes nettement plus élevées.

Un but de la présente invention est de proposer un procédé de préparation d'un fromage ou d'une spécialité fromagère, en particulier d'un fromage fondu, qui remédie aux inconvénients précités résultant notamment des températures opératoires choisies, ce procédé comprenant essentiellement :
- un mélangeage à chaud d'une pâte fromagère et d'au moins un composé thermosensible à effet nutritionnel positif, tel qu'une bactérie probiotique, une protéine sérique, une vitamine ou micronutriment, et
- un dosage à chaud du mélange ainsi obtenu dans un container adapté pour constituer le conditionnement ultérieur de la spécialité fromagère.

A cet effet, le procédé selon l'invention est tel que l'on met en oeuvre ce mélangeage immédiatement avant ce dosage, pendant une durée inférieure à 10 secondes et à une température égale ou supérieure à 60° C, pour l'obtention d'un taux de destruction thermique minimisé du ou de chaque composé dans ce container pendant toute la durée de conservation du fromage ou de la spécialité fromagère.

De préférence, on met en oeuvre ce mélangeage à une température égale ou supérieure à 68° C et, à titre encore plus préférentiel, comprise entre 70° C et 72° C.

Dans le cas où l'on met en oeuvre ce mélangeage avec des bactéries probiotiques et à une température comprise entre 60° C et 65° C environ, on souffle en outre avantageusement de l'air propre de type classe 100 ou 10 (i.e. purifié) juste au-dessus du container recevant le mélange dosé, de préférence en utilisant des moyens de soufflage tels que décrits dans l'un ou l'autre des documents EP-B1-0 895 570, EP-Bl-0 966 638 et EP-B1-1 147 345.

Quant à la durée de mise en contact dudit ou de chaque composé avec cette pâte fromagère, elle est de préférence comprise entre 1 et 5 secondes.

On notera que la durée très brève de mise en contact du ou des composé(s) avec la pâte fromagère combinée à cette température de mélangeage suffisamment élevée permet d'obtenir après dosage un taux de destruction log Nt/No de l'ordre de -4 à -5, en utilisant avantageusement pour ce ou l'un au moins de ces composé(s) une bactérie lactique choisie dans le groupe constitué par les souches de *Lactobacillus acidophilus, Lactobacillus rhamnosus* et *Pediococcus acidilactici* (plusieurs souches de bactéries lactiques peuvent être utilisées en combinaison dans le procédé de l'invention).

On notera également que ce mélangeage précédant immédiatement le dosage selon l'invention (i.e. avec un mélangeage sensiblement concomitant au dosage) permet de conserver, d'une part, les conditions thermiques usuelles de dosage à chaud pour le respect des critères hygiéniques des portions dosées et, d'autre part, la présence dans ces portions de ces composés thermosensibles (e.g. des souches vivantes ou d'autres ingrédients à effet positif) avec une minimisation de leur destruction thermique.

Selon une autre caractéristique de l'invention, l'on met en oeuvre ce mélangeage à l'entrée d'une tête de dosage délivrant directement ledit mélange dans ce container.

Avantageusement, antérieurement à ce mélangeage, l'on peut injecter à chaud le(s)dit(s) composé(s) dans la masse de cette pâte fromagère se trouvant alors à une température égale ou supérieure à 60° C, de préférence au moyen d'une pompe de dosage de type à piston et boisseau, les particules constituées dudit ou desdits composé(s) injecté(s) pouvant être dissoutes ou dispersées dans une crème liquide maintenue sous agitation.

Selon un mode particulièrement avantageux de réalisation de l'invention, l'on réalise préalablement à cette injection une micro-encapsulation desdites particules par une couche d'enrobage hydrophobe homogène, qui comprend au moins une substance hydrophobe choisie parmi un acide gras, une cire et un mélange de ceux-ci et qui est formée par l'injection de cette substance hydrophobe en fusion dans une enceinte contenant ces particules brassées par rotation du fond de l'enceinte et balayées par un flux d'air. Cette micro-encapsulation peut être mise en oeuvre en suivant le mode opératoire décrit dans le document WO-A-01/68808.

On notera que cette micro-encapsulation des particules de composé(s) à incorporer à la pâte fromagère, qui est réalisée antérieurement à cette incorporation, protège ces particules des attaques extérieures comme celles des sucs gastriques et modérément de la température et permet de ce fait d'obtenir des taux de destruction thermique encore inférieurs, pouvant avantageusement atteindre des valeurs de -1 à -3, ce rend le procédé de l'invention particulièrement intéressant pour l'industrie.

Selon un exemple de réalisation de l'invention ayant trait en particulier au cas où le ou les composé(s) à incorporer sont chacun une bactérie probiotique de la famille des bactéries lactiques, la concentration de ce(s) composé(s) dans ladite crème peut être comprise entre 10⁹ et 10¹⁰ ufc/g, et la concentration du ou des composé(s) dans le mélange peut être alors avantageusement comprise entre 5.10⁸ et 5.10⁹ ufc/g.

Selon une autre caractéristique de l'invention, l'on peut avantageusement mettre en oeuvre ledit mélangeage à contre-courant ou par flux radial, de manière à optimiser la répartition dudit ou de chaque composé dans la masse de pâte fromagère et à générer une perte de charge suffisante pour minimiser l'égouttage du mélange.

De préférence, l'on met en oeuvre ledit mélangeage dans un micro-mélangeur statique, de préférence à multi-éléments.

On notera que ce micro-mélangeur présente l'avantage d'optimiser la répartition du ou des composé(s) dans la pâte fromagère, mais que l'on pourrait néanmoins se passer de micro-mélangeur sans sortir du cadre de la présente invention.

Un fromage ou une spécialité fromagère obtenus par le procédé de préparation tel que défini ci-dessus dans lequel le(s)dit(s) composé(s) sont chacun une bactérie probiotique qui appartient à la famille des bactéries lactiques, sont caractérisés en ce qu'ils contiennent, immédiatement après ce dosage, cette ou ces bactérie(s) lactique(s) à l'état vivant selon une concentration totale égale ou supérieure à 10⁶ ufc/g.

Avantageusement, ce fromage ou cette spécialité fromagère selon l'invention peuvent contenir, quatre mois après ce dosage, cette ou ces bactérie(s) lactique(s) à l'état vivant, selon une concentration égale ou supérieure à 10⁴ ufc/g et avantageusement supérieure à 10⁵ ufc/g.

On peut ainsi se prévaloir valablement d'une concentration suffisante de bactéries probiotiques ou « ferments vivants » dans les portions obtenues et ainsi d'un effet nutritionnel avéré, du fait que l'on dénombre 10⁵ à 10⁶ ufc/g résiduelles en fin de « DLUO » (date limite d'utilisation optimale), soit au bout de 90 à 120 jours minimum d'entreposage à 4-8° C ou à 20-22° C (température ambiante).

Comme indiqué ci-dessus, il convient de rappeler que le(s) composé(s) qui sont utilisables dans la présente invention peuvent être tous composés thermosensibles à effet nutritionnel positif, comme par exemple des vitamines et/ou divers micronutriments, et que les fromages ou spécialités fromagères dosées à chaud dans le procédé de l'invention peuvent comprendre des fromages autres que les fromages fondus, e.g. des fromages frais.

Une installation selon l'invention est adaptée pour mettre en oeuvre le procédé de préparation d'un fromage ou d'une spécialité fromagère tels que définis précédemment, et cette installation est caractérisée en ce qu'elle comporte :
- une trémie doseuse de pâte fromagère à une température égale ou supérieure à 60° C, qui est pourvue d'un corps de dosage débouchant sur un conduit d'amenée de la pâte en direction d'une tête de dosage du fromage ou de la spécialité fromagère, agencée en aval de l'installation,
- un réservoir doseur dudit ou desdits composé(s) qui est pourvu d'une pompe de dosage, par exemple de type à piston et boisseau, se prolongeant par une micro-canule d'injection de ce(s) composé(s) dans ce conduit d'amenée,
- un micro-mélangeur statique de préférence à multi-éléments qui est agencé en aval de ce conduit et à l'entrée de cette tête de dosage, et
- un container alimentaire, tel qu'une barquette, dans lequel débouche ladite tête de dosage et qui est adapté pour recevoir une masse du fromage ou de la spécialité fromagère de préférence comprise entre 10 g et 30 g.

A titre optionnel, cette installation selon l'invention comprend en outre avantageusement les moyens de soufflage précités d'air propre de type classe 100 ou 10 juste au-dessus du container ou bien au niveau de la tête de dosage, en relation avec l'injection de bactéries probiotiques et dans le cas d'une température de mélangeage comprise entre 60° C et 65° C environ.

Selon une autre caractéristique de l'invention, cette installation peut comprendre en outre une unité de micro-encapsulation de particules de ce(s) composé(s) par une couche d'enrobage hydrophobe homogène, cette unité comprenant une enceinte dans laquelle est destinée à être injectée au moins une substance hydrophobe en fusion et qui est destinée à contenir ces particules brassées par rotation du fond de l'enceinte et balayées par un flux d'air.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle, en élévation et en coupe axiale, d'une installation selon l'invention pour préparer des fromages ou spécialités fromagères incorporant des composés à effet nutritionnel positif,
la figure 2 est une vue schématique en coupe axiale d'un micro-mélangeur statique utilisable dans l'installation de la figure 1,
la figure 3 est un graphique à barres montrant l'évolution mensuelle de la quantité de composé probiotique mesurée dans des portions de fromage fondu selon l'invention obtenues par l'installation de la figure 1, à une température de stockage de ces portions égale à 4° C,
la figure 4 est un graphique à barres montrant l'évolution mensuelle de la quantité du même composé probiotique mesurée dans ces mêmes portions selon l'invention, à une température de stockage de 8° C,
la figure 5 est un graphique à barres montrant l'évolution mensuelle du pH de portions de fromage selon l'invention en comparaison de portions de fromage « témoin » dépourvues de composé probiotique, à une même température de stockage de ces portions égale à 4° C, et
la figure 6 est un graphique à barres montrant l'évolution mensuelle du pH de ces portions de fromage selon l'invention en comparaison de ces portions de fromage « témoin », à une même température de stockage de ces portions égale à 8° C.

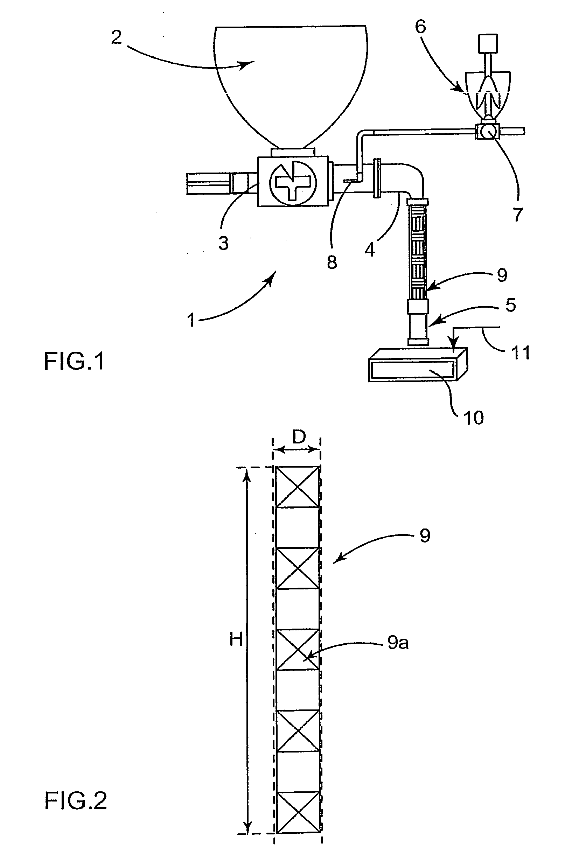

Comme illustré à la figure 1, une installation 1 selon l'invention comprend essentiellement :
- une trémie doseuse 2 à double paroi (par exemple de dénomination « COMAS ») destinée à recevoir une pâte fromagère fondue en provenance d'un cuiseur (non illustré) à une température égale ou supérieure à 60° C, cette trémie 2 étant pourvue d'un corps de dosage 3 à piston et boisseau débouchant sur un conduit d'amenée 4 de la pâte fondue en direction d'une tête de dosage 5 de la spécialité fromagère agencée en aval,
- un réservoir doseur 6 (par exemple commercialisé par PCM FOOD sous la dénomination « DOSYS DACC 8/20-8 ») destiné à doser des composés à effet nutritionnel positif, tels que des bactéries probiotiques, qui est pourvu d'une pompe de microdosage 7 par exemple de type à piston et boisseau se prolongeant par une micro-canule 8 d'injection de ce(s) composé(s) dans le conduit d'amenée 4,
- un micro-mélangeur statique 9 à multi-éléments (par exemple commercialisé par SULZER CHEMTECH France sous la dénomination « SMXS DN10 ») qui est agencé en aval de ce conduit 4 et à l'entrée de la tête de dosage 5,
- une barquette alimentaire 10 par exemple en matière plastique, dans lequel débouche la tête de dosage 5 et qui est destinée à recevoir une masse de fromage fondu par exemple comprise entre 10 et 30 g et, optionnellement,
- des moyens de soufflage 11 d'air propre de type classe 100 ou 10 agencés juste au-dessus du container 10 ou bien au niveau de la tête de dosage 5, pour purifier l'air en direction de ce container 10.

Plus précisément, la trémie doseuse 2 est apte à contenir le fromage fondu à une température d'au moins 74° C, avec une masse dosée pouvant aller de quelques grammes à plusieurs kilogrammes.

Le réservoir doseur 6 est apte à doser une solution de bactérie(s) probiotique(s) selon une masse par exemple de quelques dixièmes de gramme. Ce réservoir 6 est en particulier destiné à contenir une suspension de bactéries probiotiques vivantes à 20-22° C et il est équipé d'une sonde de température en amont de la pompe de microdosage 7, laquelle présente par exemple les caractéristiques suivantes :
- Diamètre du piston : 8 mm
- Course du piston : 20 mm
- Passage intégral : 8 mm
- Pression de refoulement : 13 bar
- Cylindrée réglable (10-100 %) : 0,01 à 1 cm³
- Raccords Aspiration / Refoulement : ¾ gaz

L'injection de cette suspension de bactéries est de préférence réalisée dans le conduit 4 à une température d'environ 70-72° C.

Quant au micro-mélangeur statique 9 qui est illustré à la figure 2, il comporte une pluralité d'éléments 9a de modèle « SMXS » qui sont successivement décalés de 90°. Le diamètre intérieur D de ce micro-mélangeur 9 est par exemple de 10,75 mm, pour une hauteur H de 90,9 mm.

### Exemple de préparation selon l'invention d'un fromage fondu incorporant des bactéries probiotiques:

Le fromage fondu utilisé a été fabriqué principalement à partir de caillé gras lactique, de beurre, de poudre de lait, de poudre de caséine et des sels de fonte, dans un cuiseur « Stephan UMM / SK 24E » (fournisseur : Stephan France). Les matières premières ont été mélangées et traitées thermiquement jusqu'à une température minimale de 85° C et maintenues en température de quelques minutes à plusieurs dizaines de minutes.

Caractéristiques physico-chimiques de ce fromage fondu :
- Extrait Sec (ES) = 47,5 %
- Matière Grasse (MG) = 32 %
- pH=5,4.

On a transféré ce fromage fondu dans la trémie doseuse 2 que l'on a maintenue à une température supérieure à 76° C par une enveloppe à double paroi.

On a préparé en parallèle des bactéries probiotiques de souche *Lactobacillus acidophilus* Rosell-52 ME dans, cet exemple de réalisation, bactéries fournies par l'Institut Rosell Lallemand. On a mélangé ces bactéries à une solution de crème liquide UHT légère (15 % de matière grasse) en les maintenant sous agitation pendant toute la durée du dosage.

La concentration Nc de ces bactéries probiotiques dans la crème était 5.10⁹ ufc/g.

Dans une dose de fromage fondu d'environ 20 g, on a incorporé une quantité de 0,4 g de cette suspension de bactéries que l'on a au préalable micro-encapsulée selon la technique présentée dans le document WO-A-01/68808. Cette incorporation des bactéries au fromage fondu a été effectuée à une température d'environ 70° C avec un temps de contact d'environ deux secondes, et la quantité des bactéries incorporées au fromage fondu était donc d'environ No =1.10⁸ ufc/g

A J+1, le dénombrement de ces bactéries au sein de la portion de fromage fondu était N_{J+1} = 1.10⁶ ufc/g. Le taux de destruction thermique était donc log(N_{J+1} / No) = -2, ce qui est satisfaisant.

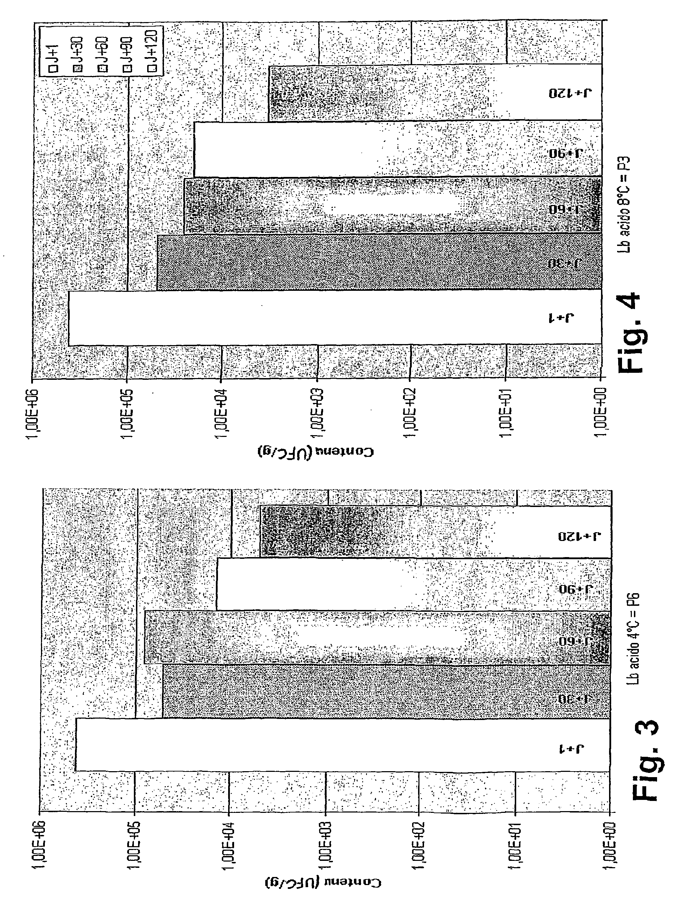

Comme illustré aux figures 3 et 4, une étude de conservation sur 4 mois en chambre froide à 4° C (figure 3) et à 8°C (figure 4) des portions fromagères ainsi obtenues a permis de déterminer la concentration ou taux de survie de ces bactéries *Lactobacillus acidophilus.*

Après 4 mois de conservation, la concentration au sein de la portion est d'environ N_{J+120} = 1.10⁴ ufc/g. Le taux de destruction au cours de la conservation est donc log(N_{J+120}/ N_{J+1}) = -2.

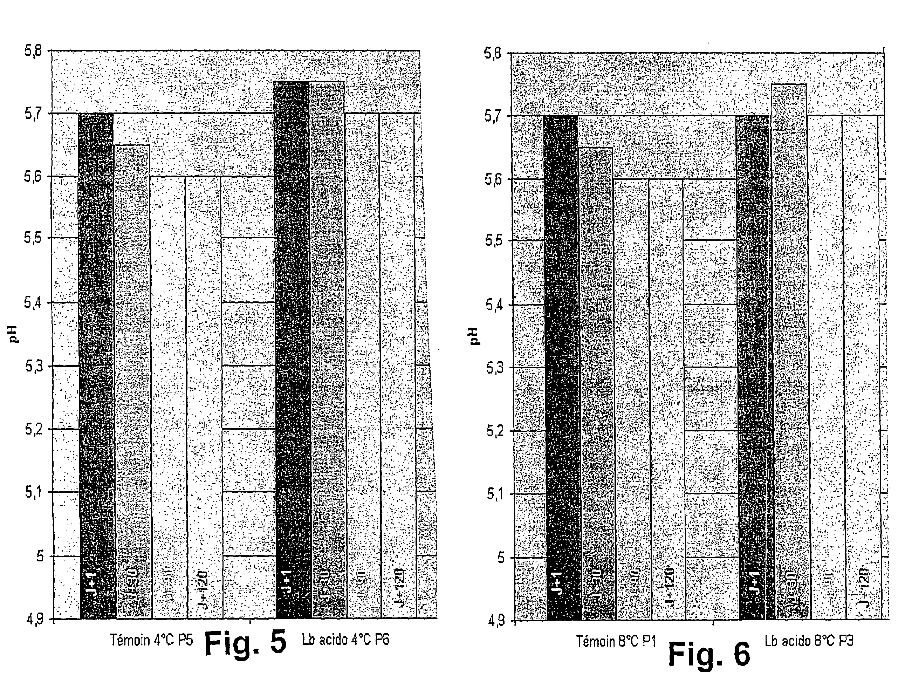

Comme illustré aux figures 5 et 6, on a réalisé en outre par un jury d'experts une étude de suivi des caractéristiques intrinsèques (texture / arômes), des portions fromagères obtenues avec ou sans bactérie *Lactobacillus acidophilus* (i.e. pour des portions selon l'invention et pour ces portions « témoin »). Ce suivi a été réalisé tous les mois pendant toute la conservation des produits, à 4° C pour la figure 5 et à 8°C pour la figure 6.

Ce jury a évalué par comparaison la texture et l'arôme des portions fromagères selon l'invention et « témoin », en parvenant à la conclusion selon laquelle aucune différence de texture ou d'arômes ne peut être relevée entre ces deux types de portions analysées pendant toute la durée du suivi sur 6 mois.

En résumé, il convient de noter que les portions fromagères dosées à chaud (à une température égale ou supérieure à 60° C) et incorporant des bactéries probiotiques - de préférence micro-encapsulées - contiennent toujours ces bactéries vivantes en quantité suffisante pour produire un effet nutritionnel avéré, tout en présentant des propriétés pérennes lors de leur conservation qui sont exemptes de défauts particuliers.

## Revendications

1. Procédé de préparation d'un fromage ou d'une spécialité fromagère, en particulier d'un fromage fondu, comprenant essentiellement :
- un mélangeage à chaud d'une pâte fromagère et d'au moins un composé thermosensible à effet nutritionnel positif, tel qu'une bactérie probiotique, une protéine sérique, une vitamine ou micronutriment, et
- un dosage à chaud du mélange ainsi obtenu dans un container (10) adapté pour constituer le conditionnement ultérieur du fromage ou de la spécialité fromagère,
**caractérisé en ce que** l'on met en oeuvre ce mélangeage immédiatement avant ce dosage, pendant une durée inférieure à 10 secondes et à une température égale ou supérieure à 60° C, pour l'obtention d'un taux de destruction thermique minimisé du ou de chaque composé dans ce container pendant toute la durée de conservation du fromage ou de la spécialité fromagère.

2. Procédé selon la revendication 1, **caractérisé en ce que** l'on met en oeuvre ce mélangeage à une température égale ou supérieure à 68° C et, de préférence, comprise entre 70° C et 72° C.

3. Procédé selon la revendication 1 ou 2, **caractérisé en ce que** l'on met en oeuvre ce mélangeage à l'entrée d'une tête de dosage (5) délivrant directement ledit mélange dans ce container.

4. Procédé selon une des revendications précédentes, **caractérisé en ce que** la durée de mise en contact dudit ou de chaque composé avec cette pâte fromagère est comprise entre 1 et 5 secondes.

5. Procédé selon une des revendications 1 à 4, **caractérisé en ce qu'**antérieurement à ce mélangeage, l'on injecte à chaud le(s)dit(s) composé(s) dans la masse de cette pâte fromagère se trouvant alors à une température égale ou supérieure à 60° C, de préférence au moyen d'une pompe de dosage (7) de type à piston et boisseau, les particules constituées dudit ou desdits composé(s) injecté(s) étant dissoutes ou dispersées dans une crème liquide maintenue sous agitation.

6. Procédé selon la revendication 5, **caractérisé en ce que**, préalablement à cette injection, l'on réalise une micro-encapsulation desdites particules par une couche d'enrobage hydrophobe homogène, qui comprend au moins une substance hydrophobe choisie parmi un acide gras, une cire et un mélange de ceux-ci et qui est formée par l'injection de cette substance hydrophobe en fusion dans une enceinte contenant ces particules brassées par rotation du fond de l'enceinte et balayées par un flux d'air.

7. Procédé selon la revendication 5 ou 6, **caractérisé en ce que** ledit ou lesdits composé(s) sont chacun une bactérie probiotique qui appartient à la famille des bactéries lactiques, la concentration du ou des composé(s) dans ladite crème étant comprise entre 10⁹ et 10¹⁰ ufc/g.

8. Procédé selon la revendication 7, **caractérisé en ce que** la concentration dudit ou desdits composé(s) dans le mélange est comprise entre 5.10⁸ et 5.10⁹ ufc/g.

9. Procédé selon la revendication 7 ou 8, **caractérisé en ce que** ledit ou l'un au moins desdits composé(s) est une bactérie lactique choisie dans le groupe constitué par *Lactobacillus acidophilus, Lactobacillus rhamnosus* et *Pediococcus acidilactici.*

10. Procédé selon une des revendications précédentes, **caractérisé en ce que** l'on met en oeuvre ledit mélangeage à contre-courant ou par flux radial, de manière à optimiser la répartition dudit ou de chaque composé dans la masse de pâte fromagère et à générer une perte de charge suffisante pour minimiser l'égouttage du mélange.

11. Procédé selon la revendication 10, **caractérisé en ce que** l'on met en oeuvre ledit mélangeage dans un micro-mélangeur statique (9), de préférence à multi-éléments (9a).

12. Installation (1) pour la mise en oeuvre d'un procédé selon une des revendications 1 à 11, **caractérisée en ce qu'**elle comporte :
- une trémie doseuse (2) de pâte fromagère à une température égale ou supérieure à 60° C, qui est pourvue d'un corps de dosage (3) débouchant sur un conduit d'amenée (4) de la pâte fromagère en direction d'une tête de dosage (5) du fromage ou de la spécialité fromagère, agencée en aval de l'installation,
- un réservoir doseur (6) dudit ou desdits composé(s) qui est pourvu d'une pompe de dosage (7), par exemple de type à piston et boisseau, se prolongeant par une micro-canule d'injection (8) de ce(s) composé(s) dans ce conduit d'amenée,
- un micro-mélangeur statique (9) à multi-éléments (9a) qui est agencé en aval de ce conduit et à l'entrée de cette tête de dosage, et
- un container alimentaire (10), tel qu'une barquette, dans lequel débouche ladite tête de dosage et qui est adapté pour recevoir une masse du fromage ou de la spécialité fromagère de préférence comprise entre 10 g et 30 g.

13. Installation (1) selon la revendication 12, **caractérisée en ce qu'**elle comprend en outre une unité de micro-encapsulation de particules de ce(s) composé(s) par une couche d'enrobage hydrophobe homogène, cette unité comprenant une enceinte dans laquelle est destinée à être injectée au moins une substance hydrophobe en fusion et qui est destinée à contenir ces particules brassées par rotation du fond de l'enceinte et balayées par un flux d'air.

## Claims

1. A method for preparing cheese or a cheese product, in particular processed cheese, comprising essentially:
- hot-mixing a cheese paste and at least one heat-sensitive compound having a positive nutritional effect, such as a probiotic bacterium, a serum protein, a vitamin or a micronutrient, and
- hot-metering the resulting mixture into a container (10) that is suitable for being the subsequent packaging of the cheese or cheese product,
**characterized in that** this mixing is carried out immediately before this metering, for a period of less than 10 seconds and at a temperature higher than or equal to 60°C, in order to obtain a minimized thermal destruction rate of the or each compound in this container for the entire shelf life of the cheese or of the cheese product.

2. The method as claimed in claim 1, **characterized in that** this mixing is carried out at a temperature higher than or equal to 68°C, and preferably of between 70°C and 72°C.

3. The method as claimed in claim 1 or 2, **characterized in that** this mixing is carried out at the inlet of a metering head (5) delivering said mixture directly into this container.

4. The method as claimed in one of the preceding claims, **characterized in that** the period of time for which said or each compound is brought into contact with this cheese paste is between 1 and 5 seconds.

5. The method as claimed in one of claims 1 to 4, **characterized in that**, prior to this mixing, said compound(s) is (are) hot-injected into the mass of this cheese paste which is then at a temperature higher than or equal to 60°C, preferably by means of a metering pump (7) of the type with piston and spool, the particles consisting of said injected compound(s) being dissolved or dispersed in a liquid cream which is kept stirring.

6. The method as claimed in claim 5, **characterized in that**, prior to this injection, said particles are microencapsulated with a homogeneous hydrophobic coating layer, which comprises at least one hydrophobic substance chosen from a fatty acid, a wax and a mixture thereof and which is formed by injection of this molten hydrophobic substance into a chamber containing these particles stirred by rotation of the bottom of the chamber and swept with a stream of air.

7. The method as claimed in claim 5 or 6, **characterized in that** said compound(s) is (are each) a probiotic bacterium which belongs to the lactic acid bacteria family, the concentration of the compound(s) in said cream being between 10⁹ and 10¹⁰ cfu/g.

8. The method as claimed in claim 7, **characterized in that** the concentration of said compound(s) in the mixture is between 5 × 10⁸ and 5 × 10⁹ cfu/g.

9. The method as claimed in claim 7 or 8, **characterized in that** said or at least one of said compound(s) is a lactic acid bacterium chosen from the group consisting of *Lactobacillus acidophilus, Lactobacillus rhamnosus* and *Pediococcus acidilactici.*

10. The method as claimed in one of the preceding claims, **characterized in that** said mixing is carried out in a countercurrent manner or by radial flow, so as to optimize the distribution of said or each compound in the cheese paste mass and to generate a pressure drop sufficient to minimize drainage of the mixture.

11. The method as claimed in claim 10, **characterized in that** said mixing is carried out in a static micromixer (9), preferably a multi-element (9a) static micromixer (9).

12. Equipment (1) for carrying out a method as claimed in one of claims 1 to 11, **characterized in that** it comprises:
- a hopper (2) for metering cheese paste at a temperature higher than or equal to 60°C, which has a metering body (3) which opens into a feed pipe (4) for feeding the cheese paste in the direction of a head (5) for metering the cheese or the cheese product, arranged downstream of the equipment,
- a reservoir (6) for metering said compound(s) which has a metering pump (7), for example a metering pump of the type with piston and spool, extending via a microcannula (8) for injecting this or these compound(s) into this feed pipe,
- a multi-element (9a) static micromixer (9) which is arranged downstream of this pipe and at the inlet of this metering head, and
- a food container (10), such as a tub, into which said metering head opens and which is suitable for receiving a mass of the cheese or of the cheese product of preferably between 10 g and 30 g.

13. The equipment (1) as claimed in claim 12, **characterized in that** it also comprises a unit for microencapsulation of particles of this compound or these compounds with a homogeneous hydrophobic coating layer, this unit comprising a chamber into which at least one molten hydrophobic substance is intended to be injected and which is intended to contain these particles stirred by rotation of the bottom of the chamber and swept with a stream of air.

## Patentansprüche

1. Verfahren zur Herstellung von Käse oder einem Käseprodukt, insbesondere Schmelzkäse, umfassend im Wesentlichen:
- Heißmischen einer Käsepaste und wenigstens einer wärmeempfindlichen Verbindung mit einem positiven Ernährungseffekt, wie ein probiotisches Bakterium, ein Serumprotein, ein Vitamin oder Mikronährstoff, und
- Heißdosieren der so erhaltenen Mischung in einen Behälter (10), der sich als spätere Verpackung für den Käse oder das Käseprodukt eignet,
**dadurch gekennzeichnet, dass** das Mischen unmittelbar vor dem Dosieren über einen Zeitraum von weniger als 10 Sekunden und bei einer Temperatur von 60 °C oder mehr durchgeführt wird, um während der gesamten Aufbewahrungsdauer des Käses oder Käseprodukts eine minimale thermische Abbaurate der oder jeder Verbindung in dem Behälter zu erreichen.

2. Verfahren nach Anspruch 1, **dadurch gekennzeichnet, dass** das Mischen bei einer Temperatur von 68 °C oder mehr und vorzugsweise zwischen 70 °C und 72 °C durchgeführt wird.

3. Verfahren nach Anspruch 1 oder 2, **dadurch gekennzeichnet, dass** das Mischen am Einlass eines Dosierkopfs (5) durchgeführt wird, der die Mischung direkt in den Behälter abgibt.

4. Verfahren nach einem der vorhergehenden Ansprüche, **dadurch gekennzeichnet, dass** der Zeitraum, für den die oder jede Verbindung mit der Käsepaste in Kontakt gebracht wird, zwischen 1 und 5 Sekunden liegt.

5. Verfahren nach einem der Ansprüche 1 bis 4, **dadurch gekennzeichnet, dass** die Verbindung(en) vor dem Mischen heiß in die Käsepastemasse eingespritzt wird(werden), die sich dann bei einer Temperatur von 60 °C oder mehr befindet, vorzugsweise mittels einer Kolbenschieber-Dosierpumpe (7), wobei die Teilchen, die aus der oder den eingespritzten Verbindung(en) bestehen, in einer flüssigen Creme, die unter Rühren gehalten wird, gelöst oder dispergiert sind.

6. Verfahren nach Anspruch 5, **dadurch gekennzeichnet, dass** die Teilchen vor dem Einspritzen mit einer homogenen hydrophoben Ummantelungsschicht mikroverkapselt werden, die wenigstens eine hydrophobe Substanz umfasst, die ausgewählt ist aus Fettsäure, Wachs und Mischungen davon, und die durch Einspritzen dieser geschmolzenen hydrophoben Substanz in eine Kammer gebildet wird, die diese Teilchen aufgerührt durch Rotation des Bodens der Kammer und überstrichen von einem Luftstrom enthält.

7. Verfahren nach Anspruch 5 oder 6, **dadurch gekennzeichnet, dass** die Verbindung(en) jeweils ein probiotisches Bakterium ist, das zur Familie der Milchsäurebakterien gehört, wobei die Konzentration der Verbindung(en) in der Creme zwischen 10⁹ und 10¹⁰ cfu/g liegt.

8. Verfahren nach Anspruch 7, **dadurch gekennzeichnet, dass** die Konzentration der Verbindung(en) in der Mischung zwischen 5 · 10⁸ und 5 · 10⁹ cfu/g liegt.

9. Verfahren nach Anspruch 7 oder 8, **dadurch gekennzeichnet, dass** die oder wenigstens eine der Verbindungen ein Milchsäurebakterium ist, ausgewählt aus der Gruppe bestehend aus *Lactobacillus acidophilus, Lactobacillus rhamnosus* und *Pediococcus acidilactici.*

10. Verfahren nach einem der vorhergehenden Ansprüche, **dadurch gekennzeichnet, dass** das Mischen im Gegenstrom oder durch Radialstrom durchgeführt wird, um die Verteilung der Verbindung(en) in der Käsepastemasse zu optimieren und einen Druckverlust zu erzeugen, der genügt, um das Abtropfen der Mischung zu minimieren.

11. Verfahren nach Anspruch 10, **dadurch gekennzeichnet, dass** das Mischen in einem statischen Mikromischer (9), vorzugsweise mit einer Vielzahl von Elementen (9a), durchgeführt wird.

12. Vorrichtung (1) zur Durchführung eines Verfahrens nach einem der Ansprüche 1 bis 11, **dadurch gekennzeichnet, dass** sie umfasst:
- einen Trichter (2) zum Dosieren von Käsepaste bei einer Temperatur von 60 °C oder mehr, der mit einem Dosierteil (3) ausgestattet ist, der sich zu einer Zufuhrleitung (4) für die Käsepaste in Richtung eines Dosierkopfs (5) für den Käse oder das Käseprodukt öffnet, der stromabwärts von der Vorrichtung angeordnet ist,
- ein Reservoir (6) zum Dosieren der Verbindung(en), das eine Dosierpumpe (7), beispielsweise eine Kolbenschieberpumpe, aufweist, die sich über eine Mikroinjektionsnadel (8) für diese Verbindung(en) in die Zufuhrleitung fortsetzt,
- einen statische Mikromischer (9) mit einer Vielzahl von Elementen (9a), der stromabwärts von dieser Leitung und am Einlass des Dosierkopfs angeordnet ist, und
- einen Lebensmittelbehälter (10), wie ein Körbchen, in welchen sich der Dosierkopf öffnet und der sich zum Aufnehmen einer Masse des Käses oder des Käseprodukts von vorzugsweise zwischen 10 g und 30 g eignet.

13. Vorrichtung (1) nach Anspruch 12, **dadurch gekennzeichnet, dass** sie weiterhin eine Einheit zur Mikroverkapselung von Partikeln dieser Verbindung(en) mit einer homogenen hydrophoben Ummantelungsschicht umfasst, wobei die Einheit eine Kammer umfasst, die zum Einspritzen wenigstens einer geschmolzenen hydrophoben Substanz bestimmt ist und die vorgesehen ist, diese Teilchen aufgerührt durch Rotation des Bodens der Kammer und überstrichen von einem Luftstrom zu enthalten.
